# EUROPEAN PATENT SPECIFICATION

(11) **EP 2 989 886 B1**
(45) Date of publication and mention of the grant of the patent: **06.11.2019**
(21) Application number: 15183382.9
(22) Date of filing: 01.09.2015
(51) Int. Cl.: A01G 9/14, E05D 15/06, A01G 9/24

(54) **IMPROVEMENTS IN DOMESTIC GREENHOUSES**
VERBESSERUNGEN BEI HAUSHALTSGEWÄCHSHÄUSERN
AMÉLIORATIONS APPORTÉES À DES SERRES DOMESTIQUES

(30) Priority: 01.09.2014 GB 201415430
(43) Date of publication of application: 02.03.2016
(73) Proprietor: Juliana Group Limited, Cheltenham Gloucestershire GL52 7RS (GB)
(72) Inventor: Boulton, Brett, Cheltenham GL52 7RS (GB); Snape, Jan, Warwickshire CV34 6UW (GB)
(74) Representative: Barker Brettell LLP

(56) References cited:
- CN-Y- 201 015 324
- DE-U1- 29 911 859
- JP-A- H11 243 790
- US-A- 5 675 946

## Description

This invention relates to improvements in greenhouses for domestic use.

A greenhouse, sometimes called a glasshouse, is a building which has walls and a roof that are typically wholly made of a transparent, or opaque, material such as glass or plastic to allow a large amount of sunlight to enter the building and to trap the resulting heat given off by parts of the building or its contents within the building so as to provide a favourable artificially warm climate in which plants can be grown.

In many parts of the world, such as Northern Europe, a greenhouse is all but essential for use in growing many types of plants and protecting them from the effects of heavy rain, frosts and strong winds. As such, they are a popular feature in the gardens of many homes.

A common arrangement of greenhouse comprises a framework of metal, typically extruded aluminium, bars, with glass panels infilling the spaces between the bars. The bars are arranged to form bays which contain one or more panels, and by appropriate selection of the number of bays greenhouses of many different shapes, lengths and widths can be made using a limited selection of components. For instance, using panels that are 2 feet (60cm) in width it is possible to provide 4 bays to form a greenhouse 8 foot long or 5 bays to provide a greenhouse 10 foot long.

Greenhouses may be free standing or lean to structures. A common shape of free standing domestic greenhouse has two parallel side walls and a roof that connects them that has a ridge line and forms an inverted v shape. A decorative trim may be provided along the top of the ridge line. The walls and roof are closed at each end by an end wall, and one end wall has a door or pair of doors. The top of the doors is typically aligned with the base of the roof and is high enough for an average height person to enter without stooping.

Other shapes are also known, including a lean to greenhouse structure in which a portion of a wall of another building, such as a the side of a house or garage, is used to form one wall of the greenhouse. The rest of the building in effect "leans" against this wall although in practice the wall may not actually carry any structural loading from the greenhouse. In a lean to structure, not all of the walls of the greenhouse will be transparent.

Hybrid structures are also known, in which part of the greenhouse is transparent and part opaque are also known. For example one end of the structure may be made of wood to provide a secure storage area where valuable tools can be hidden from prying eyes and kept safely out of reach when not in use.

To gain entry to the building it is common to provide either a single door or a pair of doors in an end of the building.

It is known to provide sliding doors or hinged doors. A sliding door will be supported along a bottom edge by locating the bottom edge in an upward facing groove provided in a threshold strip that extends all the way from one side of the doorway, across the doorway past the other side of the doorway and on by a distance that is equal to the width of the door. The top of the door is also retained in a similar downward facing groove in a guide track. This arrangement has the disadvantage that stones can become trapped in the threshold strip that can impede opening of the door. The threshold strip can also impede items being rolled through the doorway and could cause a person to trip. Also, the upper guide track may extend beyond the edge of the greenhouse which some people may consider to be unsightly.

We are aware of CN201015324 which teaches a greenhouse with a lower threshold and telescopic sliders. Also US5675946A provides an alternative without a lower threshold and DE29911859U1 and JPH11243790A illustrate other alternative of sliding doors.

According to a first aspect the invention achieved with claim 1, provides a domestic greenhouse (100) of the kind comprising at least one side wall (110, 120), a roof having at least one roof panel, and at least one end wall (130, 140), and at least one door (200, 210) that in a closed position obscures a doorway (180) opening provided in one of the end walls or side walls and in an open position enables a person access through the doorway,
the door (200, 210) comprises a sliding door that is supported by two support assemblies (220, 230), a first support assembly (220) being located at the top of the door and a second support assembly (230) being located at the bottom of the door, each support assembly (220, 230) comprising a telescopic guide having a part secured to the wall of the greenhouse and a part secured to the door(200, 210), characterised in that the part of the second support assembly (230) is fixed to the wall to one side of the doorway so that the doorway opening does not have a lower threshold strip and in that the fixed part of the upper telescopic support assembly (220) is located above the door opening, so that with the door closed the upper telescopic support assembly is in a contracted position and is extended when the door is open, and the fixed part of the lower track is located to one side of the door so that with the door closed it is extended and when open it is contracted.

Where a prior art door of a greenhouse simply slots into and slides within a pair of grooves the door of the present invention is supported by telescopic guides that connect the door to the end of the greenhouse. The use of guides provides a more secure and potentially smoother running sliding door and enables the doorway to be constructed without a threshold strip.

This arrangement has the benefit that when the door is fully open or closed one of the telescopic supports is retracted, where it has greater strength that it does when fully extended. If both were provided to the side of the door they would both be extended when the door is closed which could make it easier to cause accidental damage to the guides.

When closed one of the telescopic guides may be fully retracted and when open the other may be fully retracted. This ensures that the door is securely held in place, as the telescopic guides can generally cope with the highest loads when fully retracted.

Another benefit of locating the fixed part of the first guide assembly above the doorway is that there is no need for unsightly tracks extending out beyond the side of the greenhouse as typically is need with a prior art sliding door on a relatively small greenhouse.

The telescopic guide may comprise an elongate moving part and an elongate fixed part. The moving part and fixed part are connected so that the moving part in use can move, by sliding, in a direction along its long axis relative to an elongate fixed part, thereby varying the overall length of the telescopic guide.

Each of the telescopic guides may comprise a fixed part having a substantially flat back plate having a length in the direction of telescopic movement and a width, the back plate having two side cheeks that extends along each long side of the back plate, the base plate and side cheeks having a generally c-shaped cross section, the moving part also comprising a substantially flat plate that is slidably secured to the back plate using a plurality of support bearings that engage and are retained by the cheeks of the fixed part.

The bearings may comprise roller bearings, ball bearings or simple low friction bushes.

In a modification, the moving part of the guide assembly may comprise two moving sub-parts, one telescopically sliding relative to the fixed part, and the other telescopically sliding relative to the first moving sub-part. In this case, the first sliding subpart may be similar to the fixed, having its own side cheeks that engage and retain bearings of the second sliding sub part. This arrangement allows the overall length of the assembly to be shorter for a given range of telescopic movement compared with one with a single moving part.
The moving part of each telescopic guide may be secured to the door and the fixed part secured to the end of the greenhouse so that the flat back plate lies in a horizontal plane. In this position, the guide will be shallower than it is wide, and so it will provide good resistance to attempts to pull the door horizontally away from the end of the greenhouse compared with the guide back plate being a vertical plane.

In a most preferred arrangement the telescopic guides may be located in such a way that the moving parts "hang" down from the fixed part. This way, the back plate will be facing upwards with the slide supported by the cheeks through the bearings. This will carry the weight of the door, and any expected load applied to the door, for example as a person pushes down on the door when opening or closing or when exposed to the wind.

Each guide may be secured by one or more bolts or screws to the door and the wall of the greenhouse. These may pass through openings in the fixed part and moving part of the telescopic guide as appropriate.

Each telescopic guide may be self-closing by which we mean that at the end of travel when retracting the slide actively moves the door to the final rest position.

To accommodate variations in the size of the door and doorway during manufacture of assembly, one of the support assemblies may include an adjustable bracket, the telescopic guide being secured to the door or to the end of the greenhouse using the adjustable bracket.

In one arrangement the first support assembly is secured using a non-adjustable bracket and the second support assembly is secured through at least one adjustable bracket.

One adjustable bracket may secure the fixed part of the telescopic guide to the wall, and another may secure the moving part of the door. The adjustable brackets may be configured during assembly to permit the location of the fixed part relative to the end of the greenhouse to be adjusted vertically and also horizontally, and also the door relative to the wall. This allows the door to be adjusted to ensure that the telescopic guides do not bind when opening or closing.

The base of the door may be provided with a seal that extends from one edge of the door to the other so that the seal contacts the ground where a threshold strip would otherwise be provided. This may comprise a brush strip or similar weather seal.

The second support assembly may be located a distance above the bottom of the greenhouse to protect it from debris, and protected by an overhanging cover part which forms a part of the end of the greenhouse.

The support assembly may include an extruded frame part that forms a channel within which the fixed part is located, including any bracket where provided.

The greenhouse may include two doors, each one having the features described above and supported by respective first and second support assemblies. They may each be approximately half the width of the doorway and when closed meet in the middle of the doorway.

The walls of the greenhouse may comprise a plurality of bars that define spaces within which clear or opaque panels are located. The panels may comprise glass panels. The bars may comprise aluminium extrusions. The bars may comprise vertical bars and horizontal bars that form rectangular spaces within which the panels are located.

The door or doors may be provided in an end or a side wall of the greenhouse. Where a single door is provided it may slide to the left or to the right on opening, as viewed from outside the greenhouse facing the door.

The door may be located on the outside of the doorway so that when slide open it lies outside of the greenhouse overlapping the wall.

The greenhouse may include two sliding doors that abut at a centre of the doorway. Each door may be arranged as described herein, supported by telescopic slides at the top and bottom of each door.

The roof panel may comprise two half panels that meet at an apex defining a ridge that is located generally midway between the two side walls to form a roof that has an inverted V-shape.

There will now be described, by way of example only,
**Figure 1** is a perspective view of an embodiment of a greenhouse in accordance with the present invention with the double doors in a closed position;
**Figure 2** is a perspective view of an embodiment of a greenhouse in accordance with the present invention with the double doors in a fully open position;
**Figure 3**(a) is a detail view of a top part of the doorway and end wall of the greenhouse of Figure 1 and (b) is a detail view of a bottom part of the doorway and end wall, each detail showing the location of the fixed part of the doorway support assemblies and with the doors closed;
**Figure 4**(a) is a detail view of the top part of the doorway and end wall of the greenhouse of Figure 1 and (b) is a detail view of the bottom part of the doorway and end wall, each detail showing the location of the fixed part of the doorway support assemblies and with the doors open; and
**Figure 5** (a) is a detail view of the first support assembly and the connection to the door and end wall as viewed in cross section, and (d) is a corresponding detail view of the second, lower, support assembly viewed in cross section that also shows the adjustable support bracket that secures the support assembly to the end wall.

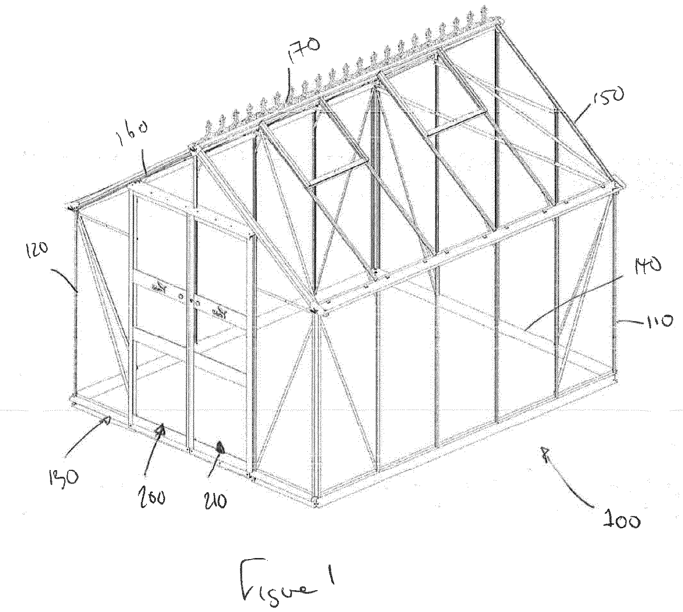

As shown in Figure 1, a domestic greenhouse 100 comprises a framework of elongate aluminium extrusions that define the edges of two rectangular side walls 110, 120 ad two end walls 130,140. Each side wall comprises a rectangular framework and each end wall comprises a rectangular framework topped by an equilateral triangular shaped framework. The walls support two roof panels 150,160 that meet at a ridge 170. An optional decorative trim is provided along the ridge.

The base part of the framework forming the two side walls and end walls sits on a rectangular footpad, typically constructed as a single concrete slab, a patchwork of small concrete slabs or pavers or a gravel bed. This basic shape can be manufactured in a variety of shapes and sizes with lengths and widths varying from, for example, 1.2m to 2.4m.

Each side and end wall is divided up into small regular spaces by a series of vertical and horizontal aluminium extrusions. Each space is filled with a panel such as a glass sheet. The sheets are typically 61 cm (2 feet) wide along the end and side walls and as shown approximately 2 m tall (6 feet).

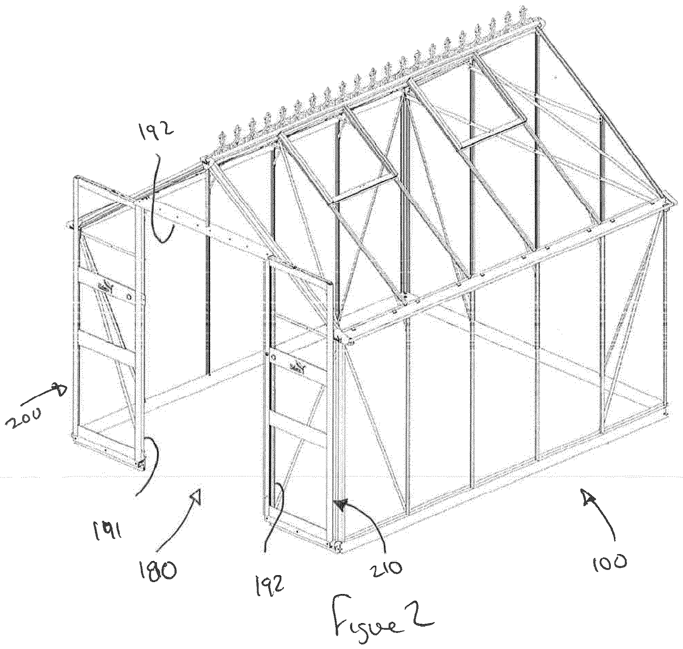

One end wall 130 is provided with a doorway opening 180. This is difficult to see in Figure 1 because it is obscured by a pair of closed doors 200,210 However it is easy to see in Figure 2 which is an identical view of the greenhouse but with the doors fully open. The doorway is defined by a frame comprising two upright edge pieces 190,191 and a horizontal top piece 192 that connects them together.

As can be seen in Figure 2, the doorway 190 has no bottom bar, known as a threshold strip, connecting the two uprights as would be required in a conventional prior art greenhouse structure. This is possible due to innovative support arrangements for the door as will now be explained.

The two doors 200, 210 when closed as shown in Figure 1 meet in the middle of the doorway 190 and cover the doorway opening. When open the two doors allow a person to pass through the doorway opening 190 for access into or out of the greenhouse 100.

Each of the doors 200, 210 can slide between the open and closed positions. The doors are identical, as well as the way they are supported, apart from being handed left or right. Therefore for convenience only one door (the right hand door 210 when viewed from the front) will be described in detail.

The door 210 comprises an aluminium frame which is infilled with glass panels to match the rest of the building. The door 210 is secured to the end wall 130 by a pair of support assemblies so that it can be slid between the open and the closed position.

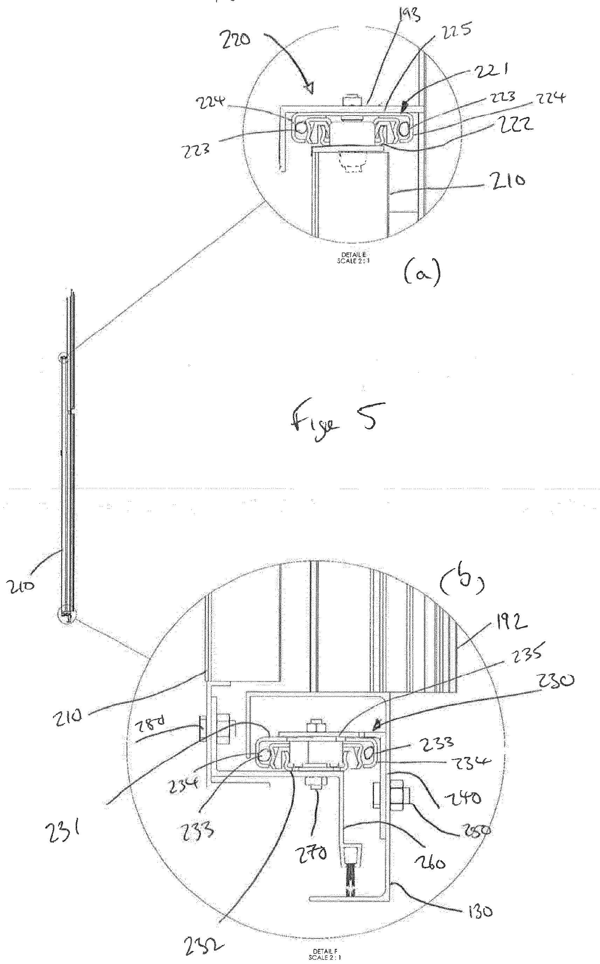

The door 210 is supported at the top and the bottom by a pair of support assemblies 220,230. Figure 5(a) and (b) shows the assemblies in cross section.

Each support assembly in this example is identical to the other and comprises a telescopic guide having a base part 221,231 that is secured to the end wall and a sliding part 222,232 that is secured to the door 210. The sliding part is displaceable relative to the fixed base part as runs on multiple bearings 223,224. In this example, the sliding part is actually formed as two sub-parts, each being displaceable relative to the other, to increase the distance over which it can telescope for a given compacted length.

The fixed part of each guide comprises a web having a substantially flat back plate 225,235, such as a metal strip, having a length in the direction of telescopic movement and a width, the back plate having two side cheeks 224,234 that extend along each long side of the back plate, the base plate and side cheeks having a generally c-shaped cross section. The moving part also comprises a substantially flat plate such as a metal strip that is slidably secured to the back plate through the plurality of support bearings 223,233 that engage and are retained by the cheeks of the fixed part.

The bearings may comprise roller bearings, ball bearings or simple low friction bushes. In this example they comprise ball bearings.

In each case, the base plate is fixed in a horizontal orientation with the moving part hung from the base plate, i.e. the moving part is below the fixed part. By horizontal we mean that the flat plate lies horizontally and the telescopic guides take up little vertical height. This allows them to be easily hidden in a groove on an underside of an extrusion forming part of the end wall.

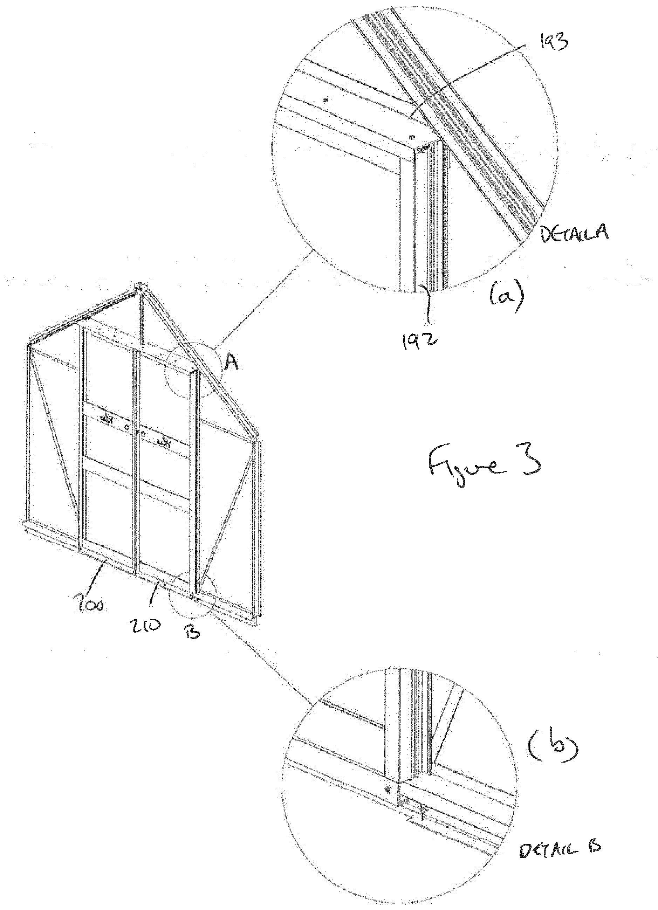

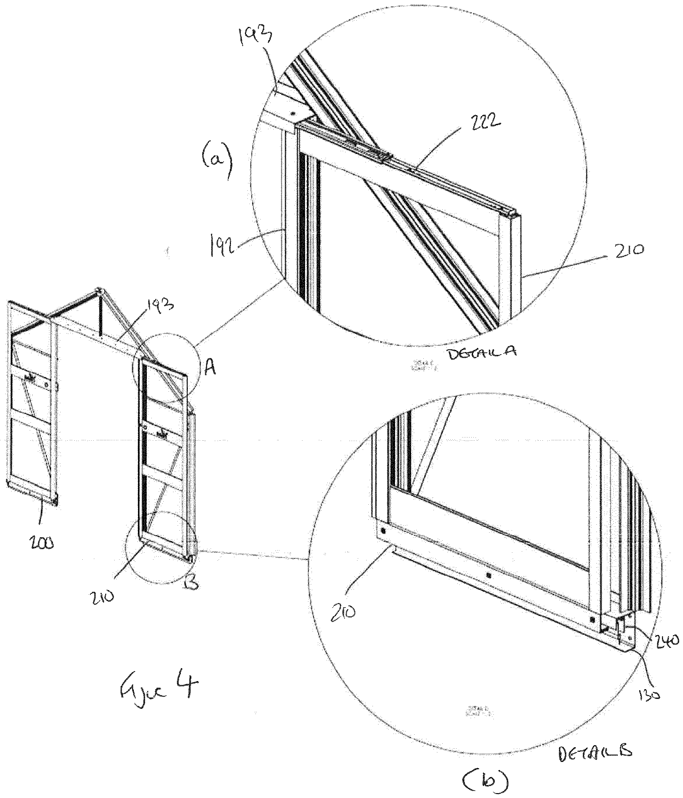

The top support assembly 220 is secured so that the fixed base portion 225 is located directly above the door opening on an underside of the doorway top part 193, so that with the door closed the telescopic guide is in a fully retracted position. This is shown in detail (a) of Figure 3(a). When the door is opened as shown in detail (a) of Figure 4(a) the moving part of the telescopic guide extends away from the fixed part.

The bottom support assembly 230 is secured so that base portion is located in a downwardly extending groove in a part of the frame of the end panel to the side of the door opening, so that with the door open the telescopic guide is fully retracted. Locating it to the side ensures that the doorway has no threshold at the bottom of the door, which would otherwise form a possible trip hazard. When the door is closed, as shown in Figure 4(b) the guide is extended.

The fixed part of the upper telescopic guide is secured directly to the frame using a plurality of bolts as shown in Figure 5(a). This provides a fixed datum for the door relative to the end wall.

The fixed part of the lower telescopic guide is secured to an adjustable bracket 240 that forms part of the lower support assembly, and this is in turn secured to the frame by bolts 250. The bolts pass though oversize holes allowing the bracket to be adjusted vertically. The fixed part of the guide is bolted to this bracket 240 using bolts that allow some adjustment horizontally.

The moving part of the lower telescopic guide 230 is secured to a further adjustable bracket 260 by bolts 270 that is in turn secured to the door by bolts 280. This bracket carries a brush strip that forms a seal with the base of the doorway. The second adjustable bracket allows the bottom of the door to be adjusted in and out and up and down (towards and away from the wall as well as vertically).

The brackets are adjusted so that the door moves smoothly without any binding of the telescopic guides.

The reader will appreciate that several modifications are possible. In particular, although the example shown has double doors at one end, a greenhouse may be provided that has only one sliding door that opens to the left or the right when viewed from the front. In this case, the door would be sized to completely cover the doorway when closed. As with the double door arrangement, the greenhouse provided would have no threshold and would also not have any unsightly sideward protruding guiderails for the door as is known in the prior art.

## Claims

1. A domestic greenhouse (100) of the kind comprising at least one side wall (110, 120), a roof having at least one roof panel, and at least one end wall (130, 140), and at least one door (200, 210) that in a closed position obscures a doorway (180) opening provided in one of the end walls or side walls and in an open position enables a person access through the doorway,
the door (200, 210) comprises a sliding door that is supported by two support assemblies (220, 230), a first support assembly (220) being located at the top of the door and a second support assembly (230) being located at the bottom of the door, each support assembly (220, 230) comprising a telescopic guide having a part secured to the wall of the greenhouse and a part secured to the door(200, 210), **characterised in that** the part of the second support assembly (230) is fixed to the wall to one side of the doorway so that the doorway opening does not have a lower threshold strip and **in that** the fixed part of the upper telescopic support assembly (220) is located above the door opening, so that with the door closed the upper telescopic support assembly is in a contracted position and is extended when the door is open, and the fixed part of the lower track is located to one side of the door so that with the door closed it is extended and when open it is contracted.

2. A domestic greenhouse according to claim 1 arranged so that when closed one of the telescopic guides is fully retracted and when open the other is fully retracted.

3. A domestic greenhouse according to any preceding claim in which each of the telescopic guides comprises a fixed part having a substantially flat back plate having a length in the direction of telescopic movement and a width, the back plate having two side cheeks that extends along each long side of the back plate, the base plate and side cheeks having a generally c-shaped cross section, the moving part also comprising a substantially flat plate that is displaceably secured to the back plate using a plurality of support bearings that engage and are retained by the cheeks of the fixed part.

4. A domestic greenhouse according to claim 3 in which the moving part of each telescopic guide is secured to the door and the fixed part secured to the end of the greenhouse so that the flat back plate lies in a horizontal plane such that the moving parts "hang" down from the fixed part.

5. A domestic greenhouse according to any preceding claim in which one of the support assemblies (220, 230) includes an adjustable bracket, the telescopic guide being secured to the door or to the end of the greenhouse using the adjustable bracket.

6. A domestic greenhouse according to claim 5 in which the first support assembly (220) is secured using a non-adjustable bracket and the second support assembly (230) is secured through at least one adjustable bracket.

7. A domestic greenhouse according to claim 5 or claim 6 in which one adjustable bracket is secured the fixed part of the telescopic guide to the wall, and another is secures the moving part of the door.

8. A domestic greenhouse according to any preceding claim in which the base of the door (200, 210) is provided with a seal that extends from one edge of the door to the other so that the seal contacts the ground where a threshold strip would otherwise be provided. This may comprise a brush strip or similar weather seal.

9. A domestic greenhouse according to any preceding claim which comprises a free standing type greenhouse or a lean-to type greenhouse.

## Patentansprüche

1. Gewächshaus (100) für den Hausgebrauch der Art, die mindestens eine Seitenwand (110, 120), ein Dach mit mindestens einer Dachplatte und mindestens eine Endwand (130, 140) und mindestens eine Tür (200, 210), die in einer geschlossenen Stellung eine in einer der Endwände oder Seitenwände vorgesehene Eingangsöffnung (180) verdeckt und in einer geöffneten Stellung einer Person Zugang durch den Eingang ermöglicht, umfasst,
wobei die Tür (200, 210) eine Schiebetür umfasst, die durch zwei Stützanordnungen (220, 230) gestützt wird, wobei eine erste Stützanordnung (220) am oberen Teil der Tür positioniert ist und eine zweite Stützanordnung (230) am unteren Teil der Tür positioniert ist, wobei jede Stützanordnung (220, 230) eine teleskopische Führung umfasst, von der ein Teil an der Wand des Gewächshauses gesichert ist und ein Teil an der Tür (200, 210) gesichert ist,
**dadurch gekennzeichnet, dass** der Teil der zweiten Stützanordnung (230) derart auf einer Seite des Eingangs an der Wand fixiert ist, dass die Eingangsöffnung keine untere Schwellenleiste aufweist, und dass der fixierte Teil der oberen teleskopischen Stützanordnung (220) über der Türöffnung positioniert ist, so dass sich die obere teleskopische Stützanordnung bei geschlossener Tür in einer zusammengezogenen Stellung befindet und auseinandergezogen ist, wenn die Tür geöffnet ist, und der fixierte Teil der unteren Schiene auf einer Seite der Tür positioniert ist, so dass er bei geschlossener Tür auseinandergezogen ist und bei geöffneter Tür zusammengezogen ist.

2. Gewächshaus für den Hausgebrauch nach Anspruch 1, das derart angeordnet ist, dass im geschlossenen Zustand eine der teleskopischen Führungen vollständig eingezogen ist und im geöffneten Zustand die andere vollständig eingezogen ist.

3. Gewächshaus für den Hausgebrauch nach einem vorhergehenden Anspruch, wobei jede der teleskopischen Führungen einen fixierten Teil umfasst, der eine im Wesentlichen flache Rückplatte mit einer Länge in der Richtung der teleskopischen Bewegung und einer Breite aufweist, wobei die Rückplatte zwei Seitenbacken aufweist, die sich entlang jeder Längsseite der Rückplatte erstrecken, wobei die Basisplatte und die Seitenbacken einen allgemein C-förmigen Querschnitt aufweisen, wobei der bewegliche Teil auch eine im Wesentlichen flache Platte umfasst, die unter Verwendung mehrerer Stützlager, die mit den Backen des fixierten Teils in Eingriff stehen und von diesen gehalten werden, verschiebbar an der Rückplatte gesichert ist.

4. Gewächshaus für den Hausgebrauch nach Anspruch 3, wobei der bewegliche Teil jeder teleskopischen Führung an der Tür gesichert ist und der fixierte Teil an dem Ende des Gewächshauses gesichert ist, so dass die flache Rückplatte in einer horizontalen Ebene liegt, so dass die beweglichen Teile von dem fixierten Teil "herabhängen".

5. Gewächshaus für den Hausgebrauch nach einem vorhergehenden Anspruch, wobei eine der Stützanordnungen (220, 230) eine einstellbare Halterung umfasst, wobei die teleskopische Führung unter Verwendung der einstellbaren Halterung an der Tür oder an dem Ende des Gewächshauses gesichert ist.

6. Gewächshaus für den Hausgebrauch nach Anspruch 5, wobei die erste Stützanordnung (220) unter Verwendung einer nicht einstellbaren Halterung gesichert ist und die zweite Stützanordnung (230) durch mindestens eine einstellbare Halterung gesichert ist.

7. Gewächshaus für den Hausgebrauch nach Anspruch 5 oder Anspruch 6, wobei eine einstellbare Halterung den fixierten Teil der teleskopischen Führung an der Wand sichert ist und eine andere ist den beweglichen Teil an der Tür sichert.

8. Gewächshaus für den Hausgebrauch nach einem vorhergehenden Anspruch, wobei die Basis der Tür (200, 210) mit einer Abdichtung versehen ist, die sich von einem Rand der Tür zu dem anderen erstreckt, so dass die Abdichtung den Boden berührt, wo ansonsten eine Schwellenleiste vorgesehen wäre. Dies kann eine Bürstenleiste oder eine ähnliche Versiegelung umfassen.

9. Gewächshaus für den Hausgebrauch nach einem vorhergehenden Anspruch, das ein freistehendes Gewächshaus oder ein angeschlossenes Gewächshaus umfasst.

## Revendications

1. Serre domestique (100) du type comprenant au moins une paroi latérale (110, 120), un toit ayant au moins un panneau de toit, et au moins une paroi d'extrémité (130, 140), et au moins une porte (200, 210) qui, dans une position fermée, masque une ouverture d'embrasure de porte (180) prévue dans l'une des parois d'extrémité ou des parois latérales et qui, dans une position ouverte, permet l'accès à une personne à travers l'embrasure de porte, la porte (200, 210) comprenant une porte coulissante qui est supportée par deux ensembles de support (220, 230), un premier ensemble de support (220) étant situé en haut de la porte et un deuxième ensemble de support (230) étant situé en bas de la porte, chaque ensemble de support (220, 230) comprenant un guide télescopique ayant une partie fixée à la paroi de la serre et une partie fixée à la porte (200, 210),
**caractérisée en ce que**
la partie du deuxième ensemble de support (230) est fixée à la paroi d'un côté de l'embrasure de porte de telle sorte que l'ouverture de l'embrasure de porte ne présente pas de bandeau de seuil inférieur et **en ce que** la partie fixe de l'ensemble de support télescopique supérieur (220) est située au-dessus de l'ouverture de porte de telle sorte que lorsque la porte est fermée, l'ensemble de support télescopique supérieur soit dans une position contractée et soit déployé lorsque la porte est ouverte, et la partie fixe de la glissière inférieure est située d'un côté de la porte de telle sorte que lorsque la porte est fermée, elle soit déployée et que lorsqu'elle est ouverte, elle soit contractée.

2. Serre domestique selon la revendication 1, prévue de telle sorte que lorsqu'elle est fermée, l'un des guides télescopiques soit complètement rentré et que lorsqu'elle est ouverte, l'autre soit complètement rentré.

3. Serre domestique selon l'une quelconque des revendications précédentes, dans laquelle chacun des guides télescopiques comprend une partie fixe ayant une plaque arrière sensiblement plate ayant une longueur dans la direction du mouvement télescopique et une largeur, la plaque arrière ayant deux joues latérales qui s'étendent le long de chaque côté long de la plaque arrière, la plaque de base et les joues latérales ayant une section transversale généralement en forme de C, la partie mobile comprenant également une plaque sensiblement plate qui est fixée de manière déplaçable à la plaque arrière en utilisant une pluralité de paliers de support qui viennent en prise avec les joues de la partie fixe et sont retenus par celles-ci.

4. Serre domestique selon la revendication 3, dans laquelle la partie mobile de chaque guide télescopique est fixée à la porte et la partie fixe est fixée à l'extrémité de la serre de telle sorte que la plaque arrière plate soit située dans un plan horizontal de telle sorte que les parties mobiles soient « suspendues » depuis la partie fixe.

5. Serre domestique selon l'une quelconque des revendications précédentes, dans laquelle l'un des ensembles de support (220, 230) comporte une console ajustable, le guide télescopique étant fixé à la porte ou à l'extrémité de la serre en utilisant la console ajustable.

6. Serre domestique selon la revendication 5, dans laquelle le premier ensemble de support (220) est fixé en utilisant une console non ajustable et le deuxième ensemble de support (230) est fixé par le biais d'au moins une console ajustable.

7. Serre domestique selon la revendication 5 ou la revendication 6, dans laquelle une console ajustable est fixée la partie fixe du guide télescopique à la paroi, et une autre est fixe la partie mobile de la porte.

8. Serre domestique selon l'une quelconque des revendications précédentes, dans laquelle la base de la porte (200, 210) est pourvue d'un joint qui s'étend d'un bord à l'autre de la porte de telle sorte que le joint vienne en contact avec le sol à l'endroit où une bande de seuil serait autrement prévue. Celui-ci peut comprendre un joint balai ou un joint d'étanchéité similaire.

9. Serre domestique selon l'une quelconque des revendications précédentes, comprenant une serre de type autoportant ou une serre de type adossé.
